# EUROPÄISCHE PATENTANMELDUNG

(11) **EP 4 219 272 A1**
(43) Veröffentlichungstag der Anmeldung: **02.08.2023**
(21) Anmeldenummer: 23152664.1
(22) Anmeldetag: 20.01.2023
(51) Int. Cl.: B62D 25/24, F16K 7/14, F16K 17/38

(54) **VERSCHLUSSVENTIL**

(30) Priorität: 28.01.2022 DE 202022100510 U
(71) Anmelder: Weber Fibertech GmbH, 88677 Markdorf (DE)
(72) Erfinder: SONNENSTÄDT, Björn, 88677 Markdorf (DE)
(74) Vertreter: RDL Patentanwälte PartG mbB

(57) **Zusammenfassung**

Verschlussventil zum Verschließen einer Öffnung (40), wobei das Verschlussventil einen Membranverschluss (30) aufweist, wobei der Membranverschluss (30) umfasst: ein Halteteil (4), das einen Durchlass (20) aufweist und dazu vorgesehen ist, im Bereich der Öffnung (40) angebracht zu sein, eine Membran (2), die in dem Halteteil (4) gehalten ist und eine geöffnete Stellung (2a), in der der Durchlass (20) offen ist, und eine geschlossene Stellung (2b), in der der Durchlass (20) verschlossen ist, einnehmen kann.

## Beschreibung

Die Erfindung betrifft ein Verschlussventil und einen Hohlraum mit einem solchen Verschlussventil.

Das vorgestellte Verschlussventil kommt bspw. in einem hermetisch abgeschlossenen Hohlraum zum Einsatz, der in einer Ausführungsform an vier Positionen jeweils eine Bohrung nach unten aufweist. Bspw. um 90 Grad gedreht gibt es eine weitere Bohrung seitlich aus dem Hohlraum. Wenn sich dieser hermetisch abgeschlossene Hohlraum um eine Temperatur X erwärmt, wobei die Temperatur X größer als 100°C ist, müssen die Bohrungen, in diesem Fall die vier Bohrungen, nach unten geschlossen werden. Hierzu wird jeweils an den Bohrungen ein Verschlussventil angebracht bzw. montiert.

Vor diesem Hintergrund werden ein Verschlussventil mit den Merkmalen des Anspruchs 1 und ein Hohlraum gemäß Anspruch 9 vorgestellt. Ausführungsformen ergeben sich aus den abhängigen Ansprüchen und aus der Beschreibung.

Das vorgestellte Verschlussventil dient zum Verschließen einer Öffnung, typischerweise einer Öffnung in einem Hohlraum. Das Verschlussventil weist einen Membranverschluss auf. Dieser Membranverschluss weist ein Halteteil auf, das einen Durchlass hat und dazu vorgesehen ist, im Bereich der Öffnung angebracht zu sein. Weiterhin weist der Membranverschluss eine Membran auf. Die Membran ist in dem Halteteil gehalten. Weiterhin kann die Membran eine geöffnete Stellung, in der der Durchlass offen bzw. geöffnet ist, und eine geschlossene Stellung, in der der Durchlass verschlossen bzw. abgeschlossen ist, einnehmen.

Das Halteteil ist dabei üblicherweise so angebracht, dass der Durchlass im Halteteil und die Öffnung zumindest teilweise übereinander und/oder ineinander liegen. Durch den Durchlass strömende Flüssigkeit strömt damit auch durch die Öffnung und umgekehrt.

Das Verschlussventil ist bspw. dazu eingerichtet, eine Öffnung in einem Hohlraum zu verschließen.

Weiterhin kann in dem Halteteil mindestens ein Wasserdurchlass ausgebildet sein, der dazu dient, Flüssigkeit hin zu der Öffnung bzw. dem Durchlass zu leiten. Es kann auch vorgesehen sein, dass sich der mindestens eine Wasserdurchlass ausbildet, wenn das Verschlussventil an die Öffnung angebracht wird, bspw. durch besondere Ausbildung des Halteteils und/oder eines die Öffnung aufweisenden Bauteils.

Der mindestens eine Wasserdurchlass kann als Kanal ausgebildet sein, der ein gerichtetes Führen einer abzuleitenden Flüssigkeit ermöglicht. In Ausgestaltung sind mehrere Kanäle bereitgestellt, die ein schnelles Ableiten der Flüssigkeit gewährleisten.

In einer weiteren Ausführungsform sind Clipse zum Befestigen des Halteteils im Bereich der Öffnung vorgesehen. Diese Clipse greifen bspw. in die Öffnung ein und sichern so eine sichere Verbindung zwischen dem Halteteil und damit dem gesamten Verschlussventil und dem Bauteil, das die Öffnung aufweist.

Die Membran kann an das Halteteil angespritzt sein. Alternativ oder ergänzend kann die Membran durch eine Ausformung am Halteteil mit diesem verbunden sein. Es kann auf diese Weise eine stoffschlüssige, formschlüssige und/oder kraftschlüssige Verbindung bereitgestellt werden.

Von Bedeutung ist, dass das Verschlussventil sicher im Bereich der Öffnung angebracht ist, so dass im geschlossenen Zustand des Verschlussventils die Öffnung sicher abgeschlossen ist und bleibt.

Weiterhin kann eine Fläche des Halteteils im Bereich des Durchlasses mit einer Fase versehen sein. Dies bedeutet, dass die Fläche, typischerweise um den Durchlass herum abgeschrägt bzw. angefast ist. Das Maß der Fase bzw. der Schräge ist durch die Beschaffenheit der Membran bestimmt. Diese soll möglichst dicht an der Fläche anliegen, so dass ein sicherer Verschluss bzw. ein sicheres Abdichten gewährleistet ist. Im geschlossenen Zustand des Verschlussventils ist so gewährleistet, dass keine Flüssigkeit durch die Öffnung bzw. durch den Durchlass durchtreten kann.

Es wird weiterhin ein Hohlraum mit mindestens einer Öffnung, in deren Bereich ein Verschlussventil der hierin beschriebenen Art angeordnet ist, vorgestellt. Weist der Hohlraum mehrere Öffnungen auf, so kann bzw. können eine der Öffnungen, mehrere Öffnungen oder auch alle Öffnungen mit einem solchen Verschlussventil versehen sein.

Der Hohlraum kann bspw. als Unterfahrschutz eines Kraftfahrzeugs ausgebildet sein.

Eine Membran ist eine dünne Schicht eines Materials, die den Stofftransport durch diese Schicht beeinflusst. Bei der hierin vorgestellten Anwendung soll die Membran für im Hohlraum befindliche Flüssigkeiten im geschlossenen Zustand des Verschlussventils möglichst wenig oder nach Möglichkeit überhaupt nicht durchlässig sein.

Das vorgestellte Verschlussventil hat die Eigenschaft, bei Änderung des thermischen Umfelds, bspw. bei steigender Temperatur, eine typischerweise einmalige Schließfunktion auszuführen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung.

### Kurze Beschreibung der Zeichnung

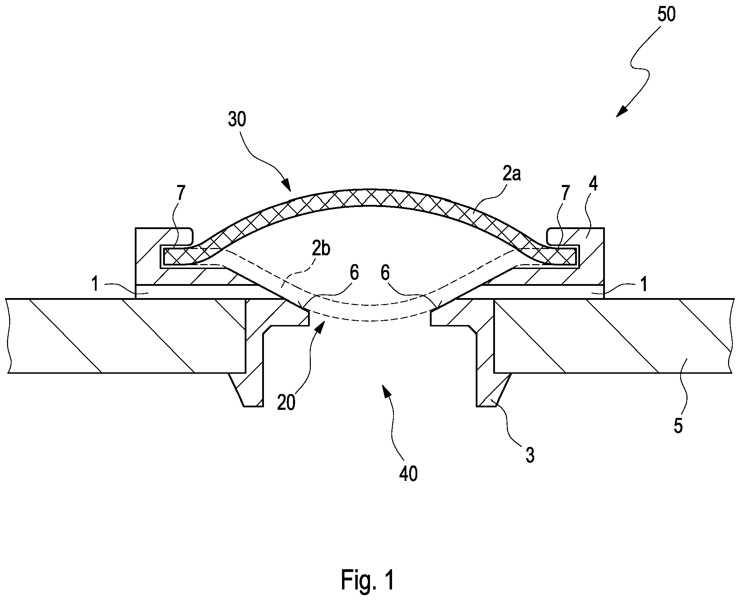

Figur 1 zeigt eine Ausführungsform des vorgestellten Verschlussventils in unterschiedlichen Stellungen.

### Ausführungsformen der Erfindung

Die Erfindung ist anhand einer Ausführungsform in der Zeichnung schematisch dargestellt und wird nachfolgend unter Bezugnahme auf die Zeichnung ausführlich beschrieben.

Figur 1 zeigt eine Ausführungsform des vorgestellten Verschlussventils, das insgesamt mit der Bezugsziffer 50 bezeichnet ist. Dieses Verschlussventil 50 dient dazu eine Öffnung 40, die in einem Unterfahrschutz 5, der einen Hohlraum darstellt, vorgesehen ist, bedarfsgerecht abzuschließen.

Das Verschlussventil 50 ist in diesem Fall als Membranverschluss 30 ausgebildet, der ein separates Bauteil darstellt. Dieses separate Bauteil kann nachträglich, bspw. mittels Clipsen 3, in den Unterfahrschutz 5 in Wasserdurchlässe 1 eingesetzt werden. Der Membranverschluss 30 weist an der Unterseite mehrere Wasserdurchlässe 1 in Form von Kanälen auf, wodurch eingedrungenes Wasser im Normalfall ablaufen kann. Diese Wasserkanäle 1 können auch durch die Anordnung des Membranverschlusses 30 zu dem Unterfahrschutzes 5 bzw. durch einen Abstand zwischen den beiden Bauteilen ausgebildet werden. Weiterhin weist das Halteteil einen Durchlass 20 auf, der im Bereich der Öffnung 40 im Unterfahrschutz 5 angeordnet ist.

Eine Membran 2 ist mützenförmig nach oben gewölbt (Bezugsziffer 2a) und besteht regelmäßig aus einem elastischen Material. Die Membran 2 wird entweder direkt an ein bspw. spritzgegossenes Halteteil 4 angespritzt oder nachträglich an diesem fixiert. Dies erfolgt bspw. mittels einer Ausformung 7 am Halteteil 4.

Am Halteteil 4 sind die inneren Flächen 6 unterhalb der Wasserdurchlässe 1 so geformt, dass sich die Membran 2, wenn sie nach unten umschlägt (Bezugsziffer 2b), exakt an diesen Flächen 6 anlegt und damit an diesen anliegt. Die Darstellung zeigt, dass die inneren Flächen in diesem Bereich angeschrägt bzw. angefast sind bzw. eine Fase haben.

Die Membran 2 kann bspw. über Material, Form und Dicke so "eingestellt" werden, dass sie ab einem bestimmten Überdruck, der bei einem thermischen Durchgehen (Thermal Runaway), d. h. bei einem sich selbst verstärkenden, Wärme erzeugenden Prozess, typischerweise entsteht, nach unten umschlägt bzw. "poppt".

Unter Einstellen wird hierin bspw. verstanden, dass die mechanischen Eigenschaften der Membran 2 über eine Variation des Materials, der Form oder der Dicke verändert bzw. angepasst werden können. Schlussendlich sollte die Membran 2 bei einem bestimmten Druck umschnappen.

Dabei verschließt die Membran 2 die Wasserdurchlässe 1 und dichtet über die Flächen 6 den Innenraum des Unterfahrschutzes gegen ggf. austretende Gase ab. Damit eine sichere Dichtwirkung entsteht, sollte die projizierte Fläche der Membran größer sein als die Summe aller Querschnitte der Wasserdurchlässe 1 im Halteteil.

Die Membran 2 kann somit zwei Stellungen, nämlich eine geöffnete Stellung 2a und eine geschlossene Stellung 2b einnehmen. In der geöffneten Stellung 2a sind die Wasserdurchlässe 1 offen und Flüssigkeiten können durch diese und durch den Durchlass 20 im Halteteil 4 und damit durch die Öffnung 40 im Unterfahrschutz 5 abfließen.

Im geschlossenen Zustand 2b der Membran 2 sind die Wasserdurchlässe 1 abgedichtet und damit sind auch die Öffnung 40 und der Durchlass 20 verschlossen. Damit ist sichergestellt, dass keine Flüssigkeit austreten kann.

## Patentansprüche

1. Verschlussventil zum Verschließen einer Öffnung (40), wobei das Verschlussventil einen Membranverschluss (30) aufweist, wobei der Membranverschluss (30) umfasst:
- ein Halteteil (4), das einen Durchlass (20) aufweist und dazu vorgesehen ist, im Bereich der Öffnung (40) angebracht zu sein,
- eine Membran (2), die in dem Halteteil (4) gehalten ist und eine geöffnete Stellung (2a), in der der Durchlass (20) offen ist, und eine geschlossene Stellung (2b), in der der Durchlass (20) verschlossen ist, einnehmen kann.

2. Verschlussventil nach Anspruch 1, das dazu eingerichtet ist, eine Öffnung (40) in einem Hohlraum zu verschließen.

3. Verschlussventil nach Anspruch 1 oder 2, bei dem in dem Halteteil mindestens ein Wasserdurchlass (1) ausgebildet ist.

4. Verschlussventil nach Anspruch 3, bei dem der mindestens eine Wasserdurchlass (1) als Kanal ausgebildet ist.

5. Verschlussventil nach einem der Ansprüche 1 bis 4, bei dem Clipse (3) zum Befestigen des Halteteils (5) im Bereich der Öffnung (40) vorgesehen sind.

6. Verschlussventil nach einem der Ansprüche 1 bis 5, bei dem die Membran (2) an das Halteteil (5) angespritzt ist.

7. Verschlussventil nach einem der Ansprüche 1 bis 6, bei dem die Membran (2) durch eine Ausformung (7) am Halteteil (4) mit diesem verbunden ist.

8. Verschlussventil nach einem der Ansprüche 1 bis 7, bei dem eine Fläche (6) des Halteteils (4) im Bereich des Durchlasses (20) mit einer Fase versehen ist.

9. Hohlraum mit mindestens einer Öffnung (40), in deren Bereich ein Verschlussventil (50) nach einem der Ansprüche 1 bis 8 angeordnet ist.

10. Hohlraum nach Anspruch 9, der als Unterfahrschutz (5) ausgebildet ist.
